## Europäisches Patentamt
## European Patent Office
## Office européen des brevets

(11) Veröffentlichungsnummer: **0 254 186 B2**

(12) **NEUE EUROPÄISCHE PATENTSCHRIFT**

⑤ Veröffentlichungstag der neue Patentschrift:
**14.09.94**

(21) Anmeldenummer: **87110147.3**

(22) Anmeldetag: **14.07.87**

(51) Int. Cl.5: **C08L 67/06**

(54) Schwundarm härtbare Polyesterharzmassen.

(30) Priorität: **25.07.86 DE 3625184**

(43) Veröffentlichungstag der Anmeldung:
**27.01.88 Patentblatt 88/04**

(45) Bekanntmachung des Hinweises auf die
Patenterteilung:
**20.03.91 Patentblatt 91/12**

(45) Bekanntmachung des Hinweises auf die
Entsheidung über den Einspruch:
**14.09.94 Patentblatt 94/37**

(84) Benannte Vertragsstaaten:
**AT DE FR GB IT**

(56) Entgegenhaltungen:
**DE-A- 2 551 144**
**DE-A- 2 657 808**
**DE-A- 2 851 454**
**US-A- 3 701 748**
**US-A- 4 263 198**

(73) Patentinhaber: **DSM N.V.**
**Het Overloon 1**
**NL-6411 TE Heerlen (NL)**

(72) Erfinder: **Hess, Bernhard, Dr.**
**Kaldenhausener Strasse 84**
**D-4130 Moers 2 (DE)**
Erfinder: **Brassat, Bert, Dr.**
**Bodelschwinghstrasse 30**
**D-4150 Krefeld (DE)**
Erfinder: **Walter, Oskar, Dipl.-Ing.**
**Buscher Holzweg 16**
**D-4150 Krefeld (DE)**

EP 0 254 186 B2

Rank Xerox (UK) Business Services
(3.10/3.09/3.3.3)

EP 0 254 186 B2

**Beschreibung**

Die Erfindung betrifft Massen auf Basis ungesättigter Polyesterharze, d.h. Mischungen $\alpha,\beta$-ethylenisch ungesättigter Polyester und damit copolymerisierbarer Monomerer, und schwundmindernder Zusätze. Sie eignen sich zur Herstellung glasfaserverstärkter Formkörper, die sich nach der Härtung ohne Beschädigung entformen lassen, weil sie nicht kleben.

Formmassen auf Basis ungesättigter Polyesterharze mit Zusätzen von Verstärkungsmitteln, wie Glasfasern, und gegebenenfalls Füllstoffen ergeben bei der Härtung Formteile mit hoher Festigkeit, Steifheit, Wärmeformbeständigkeit und Resistenz gegen Lösungsmittel und andere Chemikalien. Sie sind daher wertvolle Konstruktionswerstoffe. Um aus ihnen Teile herstellen zu können, die frei von Einfallstellen, Verzugserscheinungen, inneren Spannungen und Oberflächenwelligkeit sind, setzt man ihnen schrumpfmindernde Additive - sogenannte Low-Profile (LP)-Additive - zu.

Es ist bekannt, daß faserverstärkte ungesättigte Polyesterharze, die durch Verpressen oder Spritzgießen verarbeitet werden sollen, in der Regel eingedickt oder in einen sogenannten "B-Zustand" übergeführt werden. Man versteht darunter einen chemischen oder physikalischen Vorgang, der dem Material eine hohe Viskosität verleiht, die für eine klebfreie Handhabung, eine einwandfreie Formfüllung und einen gleichmäßigen Transport der Füll-und Verstärkungsstoffe bei der Formgebung von Vorteil ist. Damit wird es möglich, das Mischen des Polyesterharzes mit den übrigen Bestandteilen bei niedriger Harzviskosität durchzuführen und so eine optimale Benetzung der Verstärkungsstoffe durch das Harz zu erreichen, ohne daß die Verstärkungsfasern durch zu starke Knet- oder Scherwirkung zerstört werden.

Das in der Praxis übliche Verfahren zur Eindickung ungesättigter Polyesterharze verwendet Erdalkalimetalloxide bzw. -hydroxide, insbesondere Magnesiumoxid, als chemisches Verdickungsmittel.

Zur Herstellung großflächiger Preßteile, z.B. Autokarosserieteile, werden in der Praxis sogenannte Harzmatten ("Sheet Moulding Compounds" = SMC) eingesetzt. Die aus Glasfasermatten durch Tränken mit Verdickungsmittel enthaltendem Polyesterharz hergestellten "nassen" Harzmatten dicken innerhalb einer gewissen Reifezeit ein, besitzen dann eine trockene Oberfläche und können in diesem Zustand zugeschnitten und verpreßt werden.

Kleinere Formteile werden in der Praxis aus sogenannten Sauerkrautmassen ("Bulk Moulding Compounds" = BMS) hergestellt. Ihre Zusammensetzung ähnelt derjenigen der oben beschriebenen Harzmatten, doch unterscheidet sie sich - neben der kürzeren Faserlänge - durch meist etwas höheren Füllstoffgehalt und fehlendes Verdickungsmittel. Der Verzicht auf das Verdickungsmittel ist mit dem Vorteil verbunden, daß Sauerkrautmassen sofort nach der Herstellung verarbeitet werden können, aber auch über längere Zeit lagerfähig sind, ohne daß sich ihre Viskosität wesentlich ändert.

Beim Übergang auf größere Formteile ergibt sich auch für Sauerkrautmassen die Notwendigkeit von LP-Zusätzen, damit Maßhaltigkeit und Oberflächenglätte der Formteile gewährleistet sind. Während es bei der Verarbeitung von Sauerkrautmassen, die frei von LP-Zusätzen sind, keine prinzipiellen Schwiengkeiten gibt, hat sich herausgestellt, daß LP-Zusätze ein Kleben der gehärteten Formteile bewirken, so daß diese gewaltsam entformt werden müssen und dabei oft beschädigt werden. Durch Verwendung selbst größerer Mengen Formtrennmittel, z.B. Zinkstearat, läßt sich dieser Nachteil nicht beheben.

Aufgabe der Erfindung war es daher, schwundarm härtbare Polyesterharzmassen bereitzustellen, die diese Nachteile nicht besitzen.

Überraschenderweise läßt sich das Problem durch Verwendung eines ausgewählten Polyesters lösen.

Gegenstand der vorliegenden Erfindung sind schwundarm härtbare Massen auf Polyesterharzbasis aus
A) 20 bis 70 Gew.-% $\alpha,\beta$-ethylenisch ungesättigtem Polyester mit 0,4 bis 0,7 Äquivalenten $\alpha,\beta$-ethylenisch ungesättigten Doppelbindungen pro 100 g Polyester A,
B) 20 bis 55 Gew.-% mit Polyester A copolymerisierbarer Vinyl- oder Vinylidenverbindungen,
C) 8 bis 25 Gew.-% schwundverminderndem Polymer, wobei sich die Prozentangaben jeweils auf die Summe A + B + C beziehen, und gegebenenfalls
D) weiteren Zusätzen,
dadurch gekennzeichnet, daß der Polyester A eine Säurezahl von unter 28, vorzugsweise unter 26, besitzt und 0.5 bis 10, vorzugsweise 1 bis 5. Gew.-% bezogen auf Polyester A, Reste einwertiger aliphatischer $C_4$-$C_{18}$-Alkohole und oder aliphatischer $C_4$-$C_{18}$-Monocarbonsäuren einkondensiert enthält, wobei C) löslich ist in B).

Die Endgruppenmodifizierung von ungesättigten Polyestern mit einwertigen Alkoholen oder Monocarbonsäuren ist aus dem Stand der Techni (US-PS 24 23 042, 25 16 309, 28 82 256, DE-AS 34 26 425) zwar bekannt, wird aber selten praktiziert.

Der erfindungsgemäße Effekt ist überraschend` Es ist auch rückschauend nicht erklärber, weshalb beispielsweise kurzkettige einwertige Alkohole, wie z.B. Methanol, cycloaliphatische Alkohole, wie z.B.

2

Cyclohexanol, oder aromatische Monocarbonsäuren. wie z.B. Benzoesäure, den gewünschten Effekt nicht ergeben. Auch die erfindungsgemäß zu verwendenden Endgruppen führen jedoch nicht zum Erfolg, solange nicht gleichzeitig eine bestimmte Säurezahl des Polyesters A unterschritten wird,

$\alpha,\beta$-Ethylenisch ungesättigte Polyester A im Sinne der Erfindung sind die üblichen Polykondensationsprodukte von mindestens 80 Mol-%, bezogen auf die Dicarbonsäurekomponente, mindestens einer $\alpha,\beta$-ethylenisch ungesättigten Dicarbonsäure mit in der Regel 4 oder 5 C-Atomen oder deren esterbildenden Derivate, gegebenenfalls in Abmischung mit bis zu 20 Mol-%, bezogen auf die Dicarbonsäurekomponente, mindestens einer aliphatischen gesättigten Dicarbonsäure mit 4 bis 10 C-Atomen, einer cycloaliphatischen oder aromatischen Dicarbonsäure mit 8 bis 10 C-Atomen oder deren esterbildenden Derivate, mit mindestens einer Polyhydroxyverbindung, insbesondere Dihydroxyverbindung, mit 2 bis 8 C-Atomen - also Polyester, wie sie bei J. Björksten et al, "Polyesters and their Applications", Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aliphatischen gesättigten, cycloaliphatischen oder aromatischen Dicarbonsäuren oder ihre Derivate sind Phthalsäure, Phthalsäureanhydrid, Isophthalsäure, Terephthalsäure, Hexa- oder Tetrahydrophthalsäure bzw. deren Anhydride, Endomethylentetrahydrophthalsäure und deren Anhydrid, Bernsteinsäure bzw. Bernsteinsäureanydrid, Bernsteinsäureester und -chloride, Glutarsäure, Adipinsäure, Sebacinsäure. Um schwerentflammbare Harze herzustellen, können z.B. Hexachlorendomethylentetrahydrophthalsäure, Tetrachlorphthalsäure oder Tetrabromphthalsäure verwendet werden. Bevorzugt zu verwendende Polyester enthalten Maleinsäurereste, die bis zu 20 Mol-% durch Phthalsäure- oder Isophthalsäurereste ersetzt sein können. Als zweiwertige Alkohole können Ethylenglykol, Propandiol-1,2, Propandiol-1,3, Diethylenglykol, Triethylenglykol, Dipropylenglykol, Butandiol-1,3, Butandiol-1,4, Neopentylglykol, Hexandiol-1,6, 2,2-Bis-(4-hydroxycyclohexyl)-propan, bis-oxalkyliertes Bisphenol A und andere eingesetzt werden. Bevorzugt verwendet werden Ethylenglykol, Propandiol-1,2, Diethylenglykol, Dipropylenglykol und Neopentylglykol.

Bevorzugte einwertige Alkohole bzw. Monocarbonsäuren mit 4 bis 18 C-Atomen zur Einführung der erfindungsgemäß notwendigen Endgruppen sind beispielsweise n-Butanol, sek.-Butanol, Pentyl-, Hexyl-, Heptyl-, Octyl-, Dodecylalkohol in verzweigter oder unverzweigter Form, Stearylalkohol, Valeriansäure, Laurinsäure, Palmitsäure und Stearinsäure. Die einwertigen Alkohole sind gegenüber den Monocarbonsäuren bevorzugt, da diese Preßteile mit Belag-freier, glänzender Oberfläche ergeben. Besonders bevorzugt ist 2-Ethyl-hexanol-1.

Bei den anspruchsgemäßen "Resten" einwertiger Alkohole bzw. Monocarbonsäuren handelt es sich um den aus Alkoholen ROH durch Abstraktion eines Wasserstoffatoms entstehenden Rest RO- bzw. um die aus einer Monocarbonsäure R'COOH durch Abstraktion einer Hydroxylgruppe entstehenden Rest R'-CO-.

Die OH-Zahlen der Polyester A sollen zwischen 10 und 150, vorzugsweise zwischen 20 und 100, und die Molekulargewichte $M_n$ zwischen ca. 500 und 5000, vorzugsweise zwischen ca. 1000 und 3000, liegen (dampfdruckosmometrisch gemessen in Dioxan und Aceton, bei differierenden Werten wird der niedrigere als der korrekte angesehen).

Die Polyester A sollen vorzugsweise eine Mindestviskosität von 800 mPa.s, gemessen als 65 gew.-%ige Lösung in Styrol bei 20° C, aufweisen.

Die Bestimmung des Gehalts an Resten $\alpha,\beta$-ethylenisch ungesättigter Doppelbindungen erfolgt durch Mercaptananlagerung gemäß Organic Analysis. Bd. III, Seite 315, New York - London 1956, die Bestimmung der Säurezahlen gemäß DIN 53 403, die Bestimmung der OH-Zahlen gemäß DIN 53 240.

Die ungesättigten Polyester A können nach den bekannten Veresterungsverfahren, z.B. Schmelz- oder Azeotropverfahren, in kontinuierlicher oder diskontinuierlicher Verfahrensweise hergestellt werden.

Als copolymerisierbare Vinyl- und Vinylidenverbindungen B im Sinne der Erfindung eignen sich in der Polyestertechnologie gebräuchliche ungesättigte Monomere, die bevorzugt $\alpha$-substituierte Vinylgruppen oder $\beta$-substituierte Allylgruppen tragen, bevorzugt Styrol; aber auch beispielsweise kernchlorierte und -alkylierte bzw. -alkenylierte Styrole, wobei die Alkylgruppen 1 bis 4 Kohlenstoffatome enthalten können, wie z.B. Vinyltoluol, Divinylbenzol, $\alpha$-Methylstyrol, tert.-Butylstyrol, Chlorstyrole, Vinylester von Carbonsäuren mit 2 bis 6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl-und Methallylester) mit 1 bis 4 Kohlenstoffatomen in der Alkoholkomponente, ihre Amide und Nitrile; Allylverbindungen wie Allylbenzol und Allylester wie Allylacetat, Phthalsäurediallylester, Isophthalsäurediallylester, Fumarsäurediallylester, Allylcarbonate, Diallylcarbonat, Triallylphosphat und Triallylcyanurat.

Bevorzugte schwundvermindernde Polymere (C) sind beispielsweise thermoplastische hochmolekulare Polymere (DE-PS 1 694 857), z.B. Polymerisate von Acryl- und Methacrylsäureestern wie Polymethylmethacrylat und Polyethylacrylat, Homo-, Co- und Pfropfpolymerisate von Ethylen und/oder Vinylverbindungen wie Polystyrol und Polyvinylacetat, Celluloseester wie Celluloseacetatpropionat und -butyrat, wobei die Molekulargewichte zwischen 10 000 und 10 000 000 liegen können. Auch Substanzen mit geringem Molekulargewicht, die bei Raumtemperatur flüssig bis harzartig und deshalb keine "Thermoplasten" im klassischen Sinne sind, sondern den Charakter von Weichmachern haben, sind als LP-Additive empfohlen worden (AT-PS 220 369), so z.B. Dibutylphthalat und Polypropylenadipat. Außerdem sind Kombinationen von LP-Additiven aus beiden Stoffgruppen als vorteilhaft beschrieben worden (DE-OS 3 426 425), Auch Polyurethane mit mittleren Molekulargewichten (bestimmt durch Membranosmose) von 1000 bis 1 000 000, vorzugsweise 2000 bis 500 000 haben sich als vorteilhaft erwiesen, Besonders bevorzugt sind Polyurethanadipate mit einem Urethangruppengehalt von 0,001-0,7, bevorzugt 0,01-0,3 Äquivalenten pro 100 Gewichtsteilen Polyurethan.

Schwundvermindernde Polymere (C) mit freien Carboxylgruppen entsprechend einer Säurezahl von 2 bis 25 können auch verwendet werden (DE-PS 19 53 062).

Weitere Zusätze (D) im Sinne der Erfindung sind beispielsweise inerte anorganische Füllstoffe, wie Calciumcarbonat, Silikate, Tonerden, Kalk, Kohle, verstärkende Fasern, wie Glasfasern, Kohlefasern, synthetische organische Fasern Baumwolle, Asbest oder Metallgewebe, organische und anorganische Pigmente, Farbstoffe, Gleit- und Trennmittel wie Zinkstearat, UV-Absorber usw.

Zur Stabilisierung werden den erfindungsgemäßen Massen übliche Polymerisationsinhibitoren, die eine vorzeitige, unkontrollierte Gelierung verhindern, beispielsweise Hydrochinon, Toluhydrochinon, p-Benzochinon, p-tert.-Butylbrenzcatechin, Chloranil, Naphthochinon, Kupferverbindungen oder p-Nitrosodimethylanilin, in wirksamen Mengen zugesetzt.

Als Härtungskatalysatoren eignen sich beispielsweise Benzoylperoxid, tert.-Butylperbenzoat, tert.-Butylperoxid, Cyclohexanonperoxid, tert.-Butylperoctoat, Azoisobutyrodinitril, Cumolhydroperoxid oder Silylether des Benzpinakols in den üblichen Mengen.

Die Harzmischungen lassen sich am einfachsten durch Vereinigen der Lösungen der Komponenten A) und C) in Komponente B) unter Rühren bei Raumtemperatur oder leicht erhöhter Temperatur herstellen. Das Einarbeiten von Polymerisationsinhibitoren, Radikalbildnern und den üblichen Zuschlagstoffen kann beispielsweise in Knetern, Dissolvern oder auf einem Walzenstuhl erfolgen.

Die genannten Sauerkrautpreßmassen, auch BMC-Massen genannt, haben etwa die folgende Zusammensetzung: In 100 Gewichtsteilen Harzmischung (Komponente A bis C) werden 100-400, bevorzugt 150-300 Gewichtsteile anorganische Füllstoffe, 30-150, bevorzugt 50-100 Gewichtsteile Glasfasern und 0,5-5 Gewichtsteile Härtungskatalysatoren eingearbeitet.

Die Preßmassen können unter einem Druck von ca. 20 bis 140 kp/cm$^2$ bei ca. 120 bis 160 ° C - je nach Größe und Form - in ca. 0,5 bis 5 Minuten gehärtet werden.

Sie eignen sich hervorragend zur Herstellung einer Vielzahl von Formteilen, z.B. Scheinwerferreflektoren, Spulenkörpern, Autotüren, Motorhauben und Kofferraumdeckeln.

Die Prozentangaben der nachfolgenden Beispiele bedeuten Gewichtsprozente.

Beispiele

Die nachfolgend aufgeführten ungesättigten Polyester wurden durch Schmelzkondensation hergestellt. Sie wurden jeweils mit 0,02 % Hydrochinon, bezogen auf den ungesättigten Polyester, stabilisiert und danach in Styrol 65 %ig gelöst. Die Lösungen der erfindungsgemäßen Beispiele wurden jeweils mit Komponente A1) bis A7), die der Vergleichsbeispiele mit AV1) bis AV4) bezeichnet. Die Viskositätsangaben der styrolischen Lösungen beziehen sich auf Messungen bei 20 ° C im Rotationsviskosimeter. Die molare Zusammensetzung der ungesättigten Polyester, deren Kennzahlen sowie das Entformungsverhalten von Preßteilen, die in schrumpfarmer Einstellung aus den aufgeführten ungesättigten Polyestern erhalten wurden, ist nachfolgend tabellarisch aufgeführt.

EP 0 254 186 B2

| Komponente | AV1 | AV2 | A1 | A2 | A3 | A4 | A5 | AV3 | AV4 |
|---|---|---|---|---|---|---|---|---|---|
| Maleinsäureanhydrid | 1,00 | 1,00 | 1,00 | 1,00 | 1,00 | 1,00 | 1,00 | 1,00 | 1,00 |
| Propylenglykol-1,2 | 1,10 | 1,07 | 1,11 | 1,11 | 1,11 | 1,07 | 1,11 | 1,09 | 1,10 |
| Methanol | 0,13 | 0,27 | - | - | - | - | - | - | - |
| n-Butanol-1 | - | - | 0,06 | - | - | - | - | - | - |
| sek.-Butanol-2 | - | - | - | 0,06 | - | - | - | - | - |
| n-Hexanol | - | - | - | - | 0,04 | - | - | - | - |
| 2-Ethylhexanol-1 | - | - | - | - | - | 0,03 | - | 0,03 | - |
| Dodecanol-1 | - | - | - | - | - | - | 0,02 | - | - |
| Cyclohexanol | - | - | - | - | - | - | - | - | 0,04 |
| | | | | | | | | | |
| Säurezahl | 20 | 13 | 20 | 24 | 19 | 25 | 24 | 28 | 24 |
| Viskosität (mPas) | 1640 | 1651 | 1654 | 1562 | 1633 | 1566 | 1570 | 1556 | 1647 |
| Äq.Doppelbindg./100 g | 0,60 | 0,59 | 0,59 | 0,59 | 0,59 | 0,60 | 0,59 | 0,60 | 0,60 |
| | | | | | | | | | |
| Preßteil klebt: | ja | ja | nein | nein | nein | nein | nein | ja | ja |

| Komponente | A6 | A7 |
|---|---|---|
| Maleinsäureanhydrid | 1,00 | 1,00 |
| Propylenglykol-1,2 | 1,11 | 1,18 |
| Stearylalkohol | 0,016 | - |
| 2 -Ethylhexansäure | - | 0,03 |
| Säurezahl | 22 | 13 |
| Viscosität (mPas) | 1605 | 1549 |
| Äq. Doppelbindungen/100 | g 0,59 | 0,58 |
| Preßteil klebt: | nein | nein |

Als Komponente B diente Styrol.

Als Komponente C wurden benutzt:

C1: Ein Carbonsäuregruppen enthaltendes Polyvinylacetat mit einer Säurezahl von 7. Die 40 %ige Lösung der Komponente C1 in Styrol zeigte bei 25° C eine Viskosität von 5000 mPas; sie wurde mit C1L bezeichnet.

C2: Eine Polyesterurethan, hergestellt durch Umsetzung eines Polyesters aus 1 Mol Adipinsäure, 0,62 Mol Ethylenglykol und 0,40 Mol Propylenglykol-1,2 )Säurezahl: 13, OH-Zahl: 30) mit 0,025 Mol Toluylendiisocyanat-2,5. Die 70 %ige Lösung der Komponente C2 in Styrol, die mit 0,02 % Benzochinon stabilisiert war, zeigte eine Viskosität von 5000 mPas bei 20° C. Der Urethangruppengehalt beträgt 0,03 Äq. 100 g Polyesterurethan. Sie wurde mit C2L bezeichnet.

Herstellung der erfindungsgemäßen Massen:

In einem Kneter wurden die Mischungen aus den Komponenten A, B und C in der nachfolgend aufgeführten Zusammensetzung hergestellt und zum Nachweis der erfindungsgemäßen Vorteile sofort mit den aufgeführten Füllstoffen und Zuschlägen sowie Glasfasern zu Formmassen weiterverarbeitet. Die fertigen Formmassen wurden zu Platten mit den Maßen 300 x 300 x 2 mm in 3 Minuten bei 150° C und 70 bar verpreßt. Das Klebverhalten der schwundarmen Platten mit guter Oberfläche und Maßhaltigkeit ist in Tabelle 1 bereits aufgeführt.

Zusammensetzung der Mischungen:

| | |
|---|---|
| Komponente A1 bis A7 und AV1 bis AV4 jeweils: | 57,00 Gew.-T1. |
| Komponente C1L | 25,00 Gew.-T1. |
| Komponente C2L | 9,00 Gew.-T1. |
| Styrol (Komponente B) | 9,00 Gew.-T1. |
| Beispiele und Vergleichsbeispiele: | 100,00 Gew.-T1. |

| | |
|---|---|
| Tertiärbutylperbenzoat, 95 %ig | 1,00 Gew.-T1. |
| p-Benzochinon, 10 %ig in Styrol | 0,20 Gew.-T1. |
| Zinkstearat | 6,00 Gew.-T1. |
| Kreide | 250,00 Gew.-T1. |
| Glasfasern, 12 mm Länge | 89,00 Gew.-T1. |
| Härtbare Formmasse: | 446,20 Gew.-T1. |

**Patentansprüche**

1. Schwundarm härtbare Massen auf Polyesterharzbasis aus

A) 20 bis 70 Gew.-% $\alpha,\beta$-ethylenisch ungesättigtem Polyester mit 0,4 bis 0,7 Äquivalenten $\alpha,\beta$-ethylenisch ungesättigten Doppelbindungen pro 100 g Polyester A,

B) 20 bis 55 Gew.-% mit Polyester A copolymerisierbarer Vinyl- oder Vinylidenverbindungen,

C) 8 bis 25 Gew.-% schwundverminderndem Polymer, wobei sich die Prozentangaben jeweils auf die Summe A + B + C beziehen, und gegebenenfalls

D) weiteren Zusätzen,

dadurch gekennzeichnet, daß der Polyester A eine Säurezahl von unter 28 besitzt und 0,5 bis 10 Gew.-%, bezogen auf Polyester A, Reste einwertiger aliphatischer $C_4$-$C_{18}$-Alkohole und/oder aliphatischer $C_4$-$C_{18}$-Monocarbonsäuren einkondensiert enthält, wobei C) löslich ist in B).

2. Massen nach Anspruch 1, dadurch gekennzeichnet, daß der Polyester A eine Säurezahl von unter 26 besitzt.

3. Massen nach Ansprüchen 1 und 2, dadurch gekennzeichnet, daß der Polyester A 1 bis 5 Gew.-%, bezogen auf Polyester A, Reste einwertiger aliphatischer $C_4$-$C_{18}$-Alkohole und/oder aliphatischer $C_4$-$C_{18}$-Monocarbonsäuren einkondensiert enthält,

4. Massen nach Ansprüchen 1 bis 3, dadurch gekennzeichnet, daß die Reste einwertiger aliphatischer Alkohole 2-Ethyl-hexanol-1-reste sind.

5. Verwendung der Massen nach Ansprüchen 1 bis 4 zur Herstellung gehärteter Formteile.

**Claims**

1. Polyester resin-based compositions which can be hardened with little shrinkage, comprising

A) 20 to 70% by weight of an $\alpha,\beta$-ethylenically unsaturated polyester with 0.4 to 0.7 equivalent of $\alpha,\beta$-ethylenically unsaturated double bonds per 100g of polyester A,

B) 20 to 55% by weight of vinyl or vinylidene compounds which can be copolymerized with the polyester A,

C) 8 to 25% by weight of a shrinkage-reducing polymer, the percentage data in each case relating to the sum of A + B + C, and if appropriate,

D) other additives,

characterized in that the polyester A has an acid number of less than 28, and contains 0.5 to 10% by weight, based on the polyester A, of cocondensed radicals of monovalent aliphatic $C_4$-$C_{18}$-alcohols and/or aliphatic $C_4$-$C_{18}$-monocarboxylic acids, whereby C) is soluble in B).

2. Compositions according to Claim 1, characterized in that the polyester A has an acid number of less than 26.

3. Compositions according to Claims 1 and 2, characterized in that the polyester A contains 1 to 5% by weight, based on the polyester A, of cocondensed radicals of monovalent aliphatic $C_4$-$C_{18}$-alcohols and/or aliphatic $C_4$-$C_{18}$-monocarboxylic acids.

4. Compositions according to Claims 1 to 3, characterized in that the radicals of monovalent aliphatic alcohols are 2-ethyl-hexan-1-ol radicals.

5. Use of the compositions according to Claims 1 to 4 for the preparation of hardened mouldings.

**Revendications**

1. Masses durcissables, à faible retrait, à base de résines de polyesters, consistant en :

A) 20 à 70 % en poids d'un polyester à insaturation $\alpha,\beta$-éthylénique, contenant 0,4 à 0,7 équivalent de doubles liaisons à insaturation $\alpha,\beta$-éthylénique pour 100 g de son poids,

B) 20 à 55 % en poids de composés vinyliques ou vinylidéniques copolymérisables avec le polyester A,

C) 8 à 25 % en poids d'un polymère amoindrissant le retrait, ces pourcentages se rapportant dans chaque cas à la somme A + B + C, et le cas échéant

D) d'autres additifs,

caractérisées en ce que le polyester A a un indice d'acide inférieur à 28 et contient de 0,5 à 10 % de son poids de radicaux d'alcools aliphatiques monovalents en $C_4$-$C_{18}$ et/ou d'acides monocarboxyliques aliphatiques en $C_4$-$C_{18}$, à l'état condensé, C) étant soluble dans B).

2. Masses selon la revendication 1, caractérisées en ce que le polyester A a un indice d'acide inférieur à 26.

3. Masses selon les revendications 1 et 2, caractérisées en ce que le polyester A contient de 1 à 5 % de son poids de radicaux d'alcools aliphatiques monovalents en $C_4$-$C_{18}$ et/ou d'acides monocarboxyliques aliphatiques en $C_4$-$C_{18}$ à l'état condensé.

4. Masses selon les revendications 1 à 3, caractérisées en ce que les radicaux d'alcools aliphatiques monovalents sont des radicaux de 2-éthyl-hexan-1-ol.

5. Utilisation des masses selon les revendications 1 à 4 pour la fabrication de pièces moulées durcies.